# EUROPÄISCHE PATENTANMELDUNG

(11) **EP 3 985 135 A1**
(43) Veröffentlichungstag der Anmeldung: **20.04.2022**
(21) Anmeldenummer: 20202223.2
(22) Anmeldetag: 16.10.2020
(51) Int. Cl.: C22B 1/00, C22B 3/10, C22B 3/22, C22B 3/44, C22B 3/00, C25C 1/20

(54) **VERFAHREN ZUR RÜCKGEWINNUNG VON EDELMETALL AUS EDELMETALLHALTIGEN HETEROGENKATALYSATOREN**

(71) Anmelder: Heraeus Deutschland GmbH & Co. KG, 63450 Hanau (DE)
(72) Erfinder: MAIER, Dirk, 63450 Hanau (DE); GEBAUER, Christian, 63450 Hanau (DE)
(74) Vertreter: Heraeus IP

(57) **Zusammenfassung**

Verfahren zur Rückgewinnung von Edelmetall aus einem Heterogenkatalysator umfassend ein festes Trägermaterial und zumindest teilweise elementar vorliegendes Palladium, Platin und/oder Rhodium, umfassend die Schritte:
(a) Überführen des Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase,
(b) optional, mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase, und
(c) kathodische Elektrodeposition des mindestens einen Edelmetalls aus der salzsauren wässrigen Phase des Zweiphasensystems.

## Beschreibung

Die vorliegende Erfindung betrifft ein Verfahren zur Rückgewinnung von Edelmetall aus edelmetallhaltigen Heterogenkatalysatoren.

Unter dem hierin verwendeten Begriff "edelmetallhaltiger Heterogenkatalysator" oder kurz "Heterogenkatalysator" ist ein Trägermaterial zu verstehen, das mit katalytisch wirksamem Edelmetall ausgestattet ist bzw. katalytisch wirksame Edelmetallspezies aufweist.

Bei einer Vielzahl von chemischen Prozessen werden heute Edelmetalle respektive edelmetallhaltige Spezies als Katalysatoren eingesetzt, entweder in Form eines Homogenkatalysators oder in Form eines Heterogenkatalysators. Bei der homogenen Katalyse liegt die katalytisch aktive Edelmetallspezies homogen mit den Reaktanten vermischt vor, beispielsweise in Lösung, während die katalytisch aktive Edelmetallspezies bei der heterogenen Katalyse auf und/oder innerhalb eines zumindest im Wesentlichen inerten Trägermaterials vorliegt und dabei ein heterogenes Gemisch mit den Reaktanten bildet. In vielen Fällen sind Heterogenkatalysatoren bevorzugt, da sie sich auf einfache Weise, z.B. durch Filtration, aus einer Reaktionsmischung entfernen lassen. Eine Vielzahl von großtechnischen chemischen Prozessen, wie z.B. das Reforming bei der Treibstoffherstellung oder die Herstellung von Monomeren für die Polymerchemie verwenden Heterogenkatalysatoren im Multitonnenmaßstab. Heterogenkatalysatoren werden aber auch in großem Umfang bei der Gasreinigung, wie beispielsweise bei der Abgas- oder Abluftnachbehandlung eingesetzt.

Um eine hohe katalytische Aktivität zu gewährleisten, werden Edelmetalle bei Heterogenkatalysatoren typischerweise fein verteilt auf inneren und/oder äußeren Oberflächen von zumindest im Wesentlichen inerten Trägermaterialien aufgebracht. Solche Trägermaterialien sind typischerweise porös und ermöglichen eine gleichmäßige Verteilung der katalytisch aktiven Edelmetallspezies auf einer großen Oberfläche.

Nach einer gewissen Betriebsdauer lässt die Aktivität edelmetallhaltiger Katalysatoren nach und die verbrauchten Katalysatoren müssen ersetzt werden. Auf Grund des hohen Edelmetallpreises ist eine Verwendung edelmetallhaltiger Katalysatoren häufig nur dann wirtschaftlich, wenn das verwendete Edelmetall zurückgewonnen werden kann.

Zwecks Edelmetallrückgewinnung werden verbrauchte edelmetallhaltige Heterogenkatalysatoren typischerweise hydrometallurgischen Verfahren wie beispielsweise in EP 2 985 354 A1 beschrieben, unterzogen. Dabei werden die edelmetallhaltigen Heterogenkatalysatoren einem Oxidationsschritt unterzogen, bei dem das Edelmetall in eine wasserlösliche Form gebracht wird. Anschließend wird diese wasserlöslich gemachte Edelmetallspezies in mehreren Waschschritten vom Trägermaterial entfernt. Das Edelmetall muss dann aus den vereinigten Waschmedien zurückgewonnen werden, was die Handhabung großer Flüssigkeitsvolumina und energie- und zeitintensive Schritte notwendig macht. In US 7,166,145 B1 wird beispielsweise beschrieben, wie aus solchen vereinigten Waschmedien in einem mehrstufigen Verfahren Edelmetalle durch abschließende elektrolytische Abscheidung zurückgewonnen werden können; zuvor erfolgt die Trennung in feste (Trägermaterial) und flüssige Bestandteile (wässrige edelmetallhaltige Phase umfassend die Waschmedien).

Die Aufgabe der vorliegenden Erfindung bestand darin, ein effizientes Verfahren zur zumindest nahezu vollständigen Rückgewinnung von Edelmetall, genauer von Palladium und/oder Platin und/oder Rhodium, von bzw. aus edelmetallhaltigen, genauer Palladium und/oder Platin und/oder Rhodium enthaltenden Heterogenkatalysatoren zu finden. Insbesondere war es Teil der Aufgabe, ein Verfahren bereitzustellen, welches wenig Waschmedium benötigt.

Die Aufgabe kann gelöst werden durch ein Verfahren zur Rückgewinnung von Edelmetall von und/oder aus einem Heterogenkatalysator, welcher ein festes Trägermaterial und mindestens ein aus der aus Palladium (Pd), Platin (Pt) und Rhodium (Rh) bestehenden Gruppe ausgewähltes und mindestens teilweise elementar vorliegendes Edelmetall umfasst, umfassend die aufeinanderfolgenden Schritte:
(a) Überführen des mindestens einen mindestens teilweise elementar vorliegenden Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase,
(b) optional aber bevorzugt, mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase,
(b') falls Schritt (b) stattgefunden hat, optional, einmal oder mehrmals wiederholtes mindestens teilweises Abtrennen der salzsauren wässrigen Phase aus dem im vorhergehenden Schritt gebildeten Zweiphasensystem und Zugabe einer weiteren wässrigen Phase unter Bildung eines weiteren Zweiphasensystems umfassend eine salzsaure wässrige Phase und eine feste, das darin unlösliche Trägermaterial umfassende Phase, und
(c) kathodische Elektrodeposition des mindestens einen Edelmetalls entweder (c1) aus der salzsauren wässrigen Phase A1 des Zweiphasensystems A oder (c2) aus der salzsauren wässrigen Phase B1 des Zweiphasensystems B oder (c3) aus der salzsauren wässrigen Phase des final in Schritt (b') gebildeten Zweiphasensystems.

Der hierin verwendete dem Fachmann bekannte Begriff "Oxidationsstufe" bedeutet die formale Ladung eines Atoms innerhalb einer Verbindung bzw. die tatsächliche Ladung einatomiger Ionen. Atome im elementaren Zustand weisen per Definition die Oxidationsstufe 0 auf.

Hierin wird wiederholt von einem Zweiphasensystem gesprochen umfassend eine salzsaure wässrige Phase und eine feste Phase umfassend oder bestehend aus dem in der salzsauren wässrigen Phase unlöslichen Trägermaterial. Die feste Phase kann im Zweiphasensystem im Sinne einer Suspension verteilt sein oder dabei auch teilweise am Boden abgesetzt vorliegen oder die untere der beiden Phasen bilden. Letzteres ist insbesondere im Ruhezustand der Fall.

Bei den Schritten (a), (b), (b') und (c) handelt es sich um aufeinanderfolgende Schritte, und es kann sich dabei um direkt aufeinanderfolgende Schritte ohne Zwischenschritte handeln. Schritt (a) erfolgt vor den Schritten (b), (b') und (c). Das erfindungsgemäße Verfahren kann neben dem optionalen aber bevorzugt durchgeführten Schritt (b) auch weitere Verfahrensschritte aufweisen, die vor Schritt (a), zwischen den Schritten (a) bis (c) respektive nach Schritt (c) durchgeführt werden. Der bevorzugt durchgeführte Schritt (b) kann von einem optionalen Schritt (b') gefolgt werden, welcher vor Schritt (c) stattfindet. Falls Schritt (b') stattfindet, werden in diesem einmal oder mehrmals zu Schritt (b) analoge Schritte durchgeführt, wobei jeweils mindestens ein Teil einer salzsauren wässrigen Phase aus einem jeweiligen Zweiphasensystem abgetrennt und eine weitere wässrige Phase zum verbleibenden Teil des jeweiligen Zweiphasensystems zugegeben wird. Als zuzugebende weitere wässrige Phase können beispielsweise eine salzsaure Lösung, Salzsäure oder Wasser geeignet sein.

In einer Ausführungsform umfasst das erfindungsgemäße Verfahren die aufeinanderfolgenden Schritte (a) und (c) mit Schritt (c) in der Variante (c1), ohne die Schritte (b) und (b'). Mit anderen Worten, es handelt sich dann um ein Verfahren zur Rückgewinnung von Edelmetall von und/oder aus einem Heterogenkatalysator, welcher ein festes Trägermaterial und mindestens ein aus der aus Palladium, Platin und Rhodium bestehenden Gruppe ausgewähltes und mindestens teilweise elementar vorliegendes Edelmetall umfasst, umfassend die aufeinanderfolgenden Schritte:
(a) Überführen des mindestens einen mindestens teilweise elementar vorliegenden Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase, und
(c) kathodische Elektrodeposition des mindestens einen Edelmetalls aus der salzsauren wässrigen Phase A1 des Zweiphasensystems A, und ohne die Schritte (b) und (b').
Kathodische Elektrodeposition aus der salzsauren wässrigen Phase A1 des Zweiphasensystems A bedeutet, dass Schritt (c) in Gegenwart des festen in der salzsauren wässrigen Phase A1 unlöslichen Trägermaterials erfolgt. Die Edelmetallrückgewinnung erfolgt hier elektrolytisch im Wege der kathodischen Elektrodeposition.

In einer bevorzugten Ausführungsform umfasst das erfindungsgemäße Verfahren die aufeinanderfolgenden Schritte (a), (b) und (c) mit Schritt (c) in der Variante (c2), ohne den Schritt (b'). Mit anderen Worten, es handelt sich dann um ein Verfahren zur Rückgewinnung von Edelmetall von und/oder aus einem Heterogenkatalysator, welcher ein festes Trägermaterial und mindestens ein aus der aus Palladium, Platin und Rhodium bestehenden Gruppe ausgewähltes und mindestens teilweise elementar vorliegendes Edelmetall umfasst, umfassend die aufeinanderfolgenden Schritte:
(a) Überführen des mindestens einen mindestens teilweise elementar vorliegenden Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste das darin unlösliche Trägermaterial umfassende Phase,
(b) mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase, und
(c) kathodische Elektrodeposition des mindestens einen Edelmetalls aus der salzsauren wässrigen Phase B1 des Zweiphasensystems B, und ohne den Schritt (b'). Kathodische Elektrodeposition aus der salzsauren wässrigen Phase B1 des Zweiphasensystems B bedeutet, dass Schritt (c) in Gegenwart des festen in der salzsauren wässrigen Phase B1 unlöslichen Trägermaterials erfolgt. Die in Schritt (b) dieser bevorzugten Ausführungsform des erfindungsgemäßen Verfahrens mindestens teilweise abgetrennte salzsaure wässrige Phase A1 wird zwecks Rückgewinnung des oder der darin gelöst enthaltenen Edelmetalle nach üblichen dem Fachmann bekannten beispielsweise hydrometallurgischen Verfahren weiter bearbeitet. Eine Rückgewinnung von Edelmetall mittels kathodischer Elektrodeposition aus der mindestens teilweise abgetrennten salzsauren wässrigen Phase A1 findet bevorzugt nicht statt. In der Gesamtbetrachtung erfolgt die Edelmetallrückgewinnung hier teilweise nichtelektrolytisch, beispielsweise hydrometallurgisch, und teilweise elektrolytisch im Wege der kathodischen Elektrodeposition.

In noch einer weiteren Ausführungsform umfasst das erfindungsgemäße Verfahren die aufeinanderfolgenden Schritte (a), (b), (b') und (c) mit Schritt (c) in der Variante (c3). Mit anderen Worten, es handelt sich dann um ein Verfahren zur Rückgewinnung von Edelmetall von und/oder aus einem Heterogenkatalysator, welcher ein festes Trägermaterial und mindestens ein aus der aus Palladium, Platin und Rhodium bestehenden Gruppe ausgewähltes und mindestens teilweise elementar vorliegendes Edelmetall umfasst, umfassend die aufeinanderfolgenden Schritte:
(a) Überführen des mindestens einen mindestens teilweise elementar vorliegenden Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste das darin unlösliche Trägermaterial umfassende Phase,
(b) mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase,
(b') einmal oder mehrfach wiederholtes mindestens teilweises Abtrennen der salzsauren wässrigen Phase aus dem im vorhergehenden Schritt gebildeten Zweiphasensystem und Zugabe einer weiteren wässrigen Phase unter Bildung eines weiteren Zweiphasensystems umfassend eine salzsaure wässrige Phase und eine feste, das darin unlösliche Trägermaterial umfassende Phase, und
(c) kathodische Elektrodeposition des mindestens einen Edelmetalls aus der salzsauren wässrigen Phase des final in Schritt (b') gebildeten Zweiphasensystems. Kathodische Elektrodeposition aus der salzsauren wässrigen Phase des final in Schritt (b') gebildeten Zweiphasensystems bedeutet, dass Schritt (c) in Gegenwart des festen in der salzsauren wässrigen Phase unlöslichen Trägermaterials erfolgt. Die bei dieser Ausführungsform des erfindungsgemäßen Verfahrens in den Schritten (b) und (b') mindestens teilweise abgetrennten salzsauren wässrigen Phasen A1 und B1 sowie gegebenenfalls weitere in Schritt (b') mindestens teilweise abgetrennte salzsaure wässrige Phasen können jeweils alleine oder zweckmäßigerweise miteinander vereinigt zwecks Rückgewinnung des oder der darin gelöst enthaltenen Edelmetalle nach üblichen dem Fachmann bekannten beispielsweise hydrometallurgischen Verfahren weiter bearbeitet werden. Eine Rückgewinnung von Edelmetall mittels kathodischer Elektrodeposition aus den mindestens teilweise abgetrennten salzsauren wässrigen Phase A1 und B1 sowie den gegebenenfalls weiteren in Schritt (b') mindestens teilweise abgetrennten salzsauren wässrigen Phasen findet bevorzugt nicht statt. In der Gesamtbetrachtung erfolgt die Edelmetallrückgewinnung hier teilweise nichtelektrolytisch, beispielsweise hydrometallurgisch, und teilweise elektrolytisch im Wege der kathodischen Elektrodeposition.

Für alle drei vorerwähnten Ausführungsformen des erfindungsgemäßen Verfahrens ist es erfindungswesentlich, dass die kathodische Elektrodeposition gemäß Schritt (c) vorteilhaft aus der salzsauren wässrigen Phase des betreffenden Zweiphasensystems erfolgt, d.h. jeweils in Gegenwart des festen in der jeweiligen salzsauren wässrigen Phase unlöslichen Trägermaterials oder, anders ausgedrückt, in jedem Falle in Anwesenheit des gesamten jeweiligen Zweiphasensystems A respektive B respektive des in Schritt (b') final gebildeten Zweiphasensystems.

Der im erfindungsgemäßen Verfahren mit Oxidationsmittel in Gegenwart von Salzsäure behandelte Heterogenkatalysator umfasst ein festes Trägermaterial und mindestens ein mindestens teilweise elementar vorliegendes Edelmetall ausgewählt aus der Gruppe bestehend aus Palladium, Platin und Rhodium; mit anderen Worten, der Heterogenkatalysator umfasst ein festes Trägermaterial und jeweils mindestens teilweise elementar vorliegendes Palladium und/oder Platin und/oder Rhodium. Bevorzugt umfasst der Heterogenkatalysator neben Palladium und/oder Platin und/oder Rhodium keine weiteren Edelmetalle. In einer Ausführungsform besteht der Heterogenkatalysator aus einem festen Trägermaterial und aus jeweils mindestens teilweise elementar vorliegendem Palladium und/oder Platin und/oder Rhodium. Etwaiges nicht elementar vorliegendes Edelmetall kann als Edelmetallverbindung in einer positiven Oxidationsstufe, beispielsweise als Edelmetalloxid, vorliegen. Der aus Palladium, Platin und/oder Rhodium gebildete Edelmetallgehalt des Heterogenkatalysators kann beispielsweise im Bereich von 0,02 bis 80 Gew.-% (Gewichts-%) liegen. Das mindestens eine mindestens teilweise elementar vorliegende Edelmetall ist wie gesagt ausgewählt aus der Gruppe bestehend aus Palladium, Platin und Rhodium. Besagte Edelmetalle können untereinander legiert vorliegen. Vorzugsweise handelt es sich um mindestens teilweise elementar vorliegendes Platin und/oder um mindestens teilweise elementar vorliegendes Palladium.

Hierin wird von festem Trägermaterial gesprochen. Darunter ist ein praktisch edelmetallfreier fester Träger zu verstehen, der mit katalytisch wirksamem Edelmetall respektive katalytisch wirksamer Edelmetallspezies ausgestattet werden kann. Geeignete feste Trägermaterialien sind chemisch zumindest weitestgehend inert gegenüber vielen verschiedenen Bedingungen respektive Reaktionsbedingungen; dies kann auch für nachstehend noch erwähnte kohlenstoffbasierte Träger gewährleistet sein. Insbesondere ist das feste Trägermaterial zumindest weitestgehend inert gegenüber sauren und oxidierenden Medien, bevorzugt auch gegenüber basischen Medien. Es ist unlöslich in wässrigen Medien in einem pH-Wertbereich von -1 bis +7, bevorzugt auch im alkalischen Bereich. "Unlöslich" ist dabei nicht absolut zu verstehen, der Fachmann versteht es als im Wesentlichen unlöslich oder praktisch unlöslich. Geeignete Trägermaterialien sind kommerziell erhältlich oder lassen sich über herkömmliche Verfahren, die dem Fachmann bekannt sind, herstellen. Beispiele für Trägermaterialien sind anorganische Keramikmaterialien, beispielsweise reine Oxidkeramiken, wie etwa Aluminiumoxid, Zirkoniumoxid, Titandioxid, Siliziumdioxid, aber auch Mischoxidkeramiken, wie z.B. Aluminiumtitanat und Dispersionskeramik (Al₂O₃/ZrO₂). Die Trägermaterialien können mit weiteren Elementen, wie z.B. Seltenerdmetallen dotiert sein. Weitere Beispiele für Trägermaterialien umfassen Nichtoxidkeramiken, wie zum Beispiel Siliciumcarbid, Siliciumnitrid, Aluminiumnitrid, Borcarbid und Bornitrid. Weitere Beispiele sind silikatbasierte Materialien, insbesondere Aluminiumsilikate, ganz besonders Zeolithe.

Eine weitere Klasse von möglichen Trägermaterialien stellen kohlenstoffbasierte Materialien dar. Wie schon erwähnt müssen die Trägermaterialien eine zumindest gewisse Resistenz gegenüber den Bedingungen aufweisen, die unter den katalytischen Einsatzbedingungen und den Bedingungen des erfindungsgemäßen Verfahrens vorherrschen. Handelt es sich bei dem Trägermaterial um ein Kohlenstoffmaterial, kann es bevorzugt sein, dass dieses Kohlenstoffmaterial einen hohen Graphitisierungsgrad aufweist. Kohlenstoff-basierte Trägermaterialien mit hohem Graphitisierungsgrad sind auch kommerziell erhältlich, beispielsweise unter der Bezeichnung Porocarb^{®} von Heraeus.

Im Allgemeinen handelt es sich bei den in Schritt (a) des erfindungsgemäßen Verfahrens mit Oxidationsmittel in Gegenwart von Salzsäure behandelten Heterogenkatalysatoren um Materialien mit einer großen Oberfläche, beispielsweise mit einer BET-Oberfläche von 10 bis 500 m²/g, bevorzugt 300 bis 500 m²/g. Im Allgemeinen handelt es sich dabei um poröse Materialien. Die BET-Oberfläche kann mittels BET-Messung gemäß DIN ISO 9277 (gemäß Kapitel 6.3.1, statisch-volumetrisches Messverfahren, verwendetes Gas: Stickstoff) bestimmt werden. Sofern nicht anders vermerkt, handelt es sich bei allen hierin zitierten Normen jeweils um die aktuelle Fassung zum Zeitpunkt des Prioritätsdatums der vorliegenden Patentanmeldung. Die offene Porosität kann über das offene Porenvolumen ausgedrückt werden. Das offene Porenvolumen kann mittels Quecksilberporosimetrie oder mittels Bestimmung des Wasseraufnahmevermögens bestimmt werden. Es kann beispielsweise im Bereich von 0,2 bis 1,2 ml/g liegen. Die Porosität kann durch Poren verschiedener Größenordnungen gebildet werden, beispielsweise Meso- und/oder Makroporen. Die Porengrößen können beispielsweise im Bereich von 5 nm bis 10 µm liegen.

Der Heterogenkatalysator kann in Partikelform vorliegen. Die durchschnittliche Partikelgröße d50 des Trägermaterials kann dabei beispielsweise im Bereich von 3 bis 100 µm liegen. Die durchschnittliche Partikelgröße d50 kann durch Laserbeugungsmethoden unter Verwendung eines Partikelgrößenanalysators bestimmt werden. Der Heterogenkatalysator kann aber auch in Form von Formkörpern vorliegen. Beispiele für Formkörper umfassen Stränge, Zylinder, Pellets, Ringe, Multi-Loch-Ringe, Kugeln, Sattelkörper, Räder, Sessel, Schaumkörper und Waben. Solche Formkörper können an der dicksten Stelle Durchmesser von beispielsweise 100 µm bis zu 50 cm aufweisen. Der Heterogenkatalysator kann im Übrigen unabhängig davon, ob er partikelförmig oder als definiert geformter Formkörper vorliegt, vor Schritt (a) zerkleinert, beispielsweise gemahlen, werden.

Im Allgemeinen handelt es sich bei den im erfindungsgemäßen Verfahren mit Oxidationsmittel in Gegenwart von Salzsäure behandelten Heterogenkatalysatoren um verbrauchte Heterogenkatalysatoren. Von einem verbrauchten Heterogenkatalysator spricht man, wenn die katalytische Aktivität des Heterogenkatalysators nach einer gewissen Betriebsdauer nachgelassen hat und nicht mehr ausreichend ist. Je nach Prozess, in dem der verbrauchte Heterogenkatalysator eingesetzt war, können sich beispielsweise gegenüber den ursprünglichen katalytisch aktiven Edelmetallspezies veränderte Edelmetallspezies und/oder weitere ursprünglich nicht vorhandene Substanzen auf dem Trägermaterial befinden. Daher kann es zweckmäßig sein, den Heterogenkatalysator vor Durchführung des erfindungsgemäßen Verfahrens, genauer gesagt vor Durchführung des Verfahrensschrittes (a), neben der vorerwähnten möglichen mechanischen Zerkleinerung weiteren Vorbehandlungsschritten zu unterziehen. Insofern können die Heterogenkatalysatoren vor Schritt (a) entsprechend vorbehandelt werden oder worden sein. Beispielsweise kann eine Vorbehandlung in Form einer thermischen Behandlung oder eines Glühens, vorteilhaft sein. Dies ist vor allem dann zweckmäßig, wenn der Heterogenkatalysator nach seinem Einsatz mit organischen Substanzen belegt ist und diese vor Schritt (a) durch Pyrolyse und/oder Verbrennung entfernt werden sollen. Falls der Heterogenkatalysator Edelmetall nicht in elementarer Form, sondern als Edelmetallspezies in einer höheren Oxidationsstufe umfasst, kann eine reduzierende Vorbehandlung, besonders vorteilhaft in reduzierender Atmosphäre, zweckmäßigerweise durchgeführt werden. Insbesondere kann eine Vorbehandlung vor Schritt (a) demnach eine thermische Behandlung, eine Reduktionsbehandlung oder eine thermische Behandlung gefolgt von einer Reduktionsbehandlung umfassen.

In Verfahrensschritt (a) wird das mindestens eine mindestens teilweise elementar vorliegende Edelmetall durch Behandeln des Heterogenkatalysators mit Oxidationsmittel in Gegenwart von Salzsäure in eine Oxidationsstufe > 0 unter Bildung eines Zweiphasensystems A umfassend eine salzsaure wässrige Phase A1 und eine feste, das darin unlösliche Trägermaterial umfassende Phase überführt.

Während Verfahrensschritt (a) liegt initial ein Reaktionssystem vor, welches den Heterogenkatalysator umfassend den Träger mit dem mindestens einen mindestens teilweise elementar vorliegenden Edelmetall, Salzsäure und ein oder mehrere Oxidationsmittel umfasst. Nach Abschluss von Verfahrensschritt (a) erhält man ein Zweiphasensystem A umfassend eine salzsaure wässrige Phase A1 und eine feste, das darin unlösliche Trägermaterial umfassende Phase. Die salzsaure wässrige Phase A1 umfasst das vom Träger entfernte und nunmehr in einer Oxidationsstufe >0 vorliegende Edelmetall in gelöster Form. Die feste Phase umfasst das in der salzsauren wässrigen Phase A1 unlösliche und im Wesentlichen vom Edelmetall befreite Trägermaterial als Partikel und/oder als Formkörper.

Die in Verfahrensschritt (a) verwendete Salzsäure kann beispielsweise eine Konzentration im Bereich von 1 bis 12 mol Säure (H₃O⁺) pro Liter haben.

Das oder die in Verfahrensschritt (a) verwendeten Oxidationsmittel können fest, flüssig oder gasförmig sein. Beispiele für verwendbare, dem Fachmann bekannte feste Oxidationsmittel umfassen Chlorate, Nitrate, Bromate, lodate, Chlorite, Bromite, lodite, Hypochlorite, Perchlorate und Peroxidverbindungen. Solche Oxidationsmittel können insbesondere als Salze von Alkali-oder Erdalkalimetallen vorliegen. Als flüssige Oxidationsmittel eignen sich beispielsweise wässrige Lösungen der genannten festen Oxidationsmittel und/oder Wasserstoffperoxid. Als gasförmige Oxidationsmittel eignen sich insbesondere Chlor und Ozon. Die Oxidationsmittel können einzeln oder in beliebiger Kombination eingesetzt werden.

Die Einwirkdauer des mindestens einen Oxidationsmittels ist nicht weiter beschränkt. In einer bevorzugten Ausführungsform kann die Einwirkdauer 5 bis 240 Minuten, besonders bevorzugt 10 bis 120 Minuten und insbesondere 15 bis 60 Minuten betragen. Der Oxidationsschritt kann in einem Temperaturbereich von beispielsweise 20 bis 80 °C oder sogar bis hin zur Siedetemperatur durchgeführt werden.

Nach der Behandlung mit dem Oxidationsmittel liegt das mindestens eine Edelmetall in einer Oxidationsstufe > 0 vor. Bevorzugt liegt beispielsweise Palladium als Pd(ll) und/oder Pd(IV), Platin als Pt(II) und/oder Pt(IV), und Rhodium als Rh(I) und/oder Rh(III) vor.

Während Verfahrensschritt (a) kann das mindestens eine Edelmetall zumindest teilweise, größtenteils oder nahezu vollständig vom und/oder aus dem Trägermaterial in die salzsaure wässrige Phase übergehen und dabei final die salzsaure wässrige Phase A1 bilden.

Grundsätzlich ist es bei der Rückgewinnung von Edelmetall von und/oder aus verbrauchten edelmetallhaltigen Heterogenkatalysatoren wünschenswert, das oder die Edelmetalle nahezu vollständig vom Trägermaterial zu entfernen. Unter einer nahezu vollständigen Entfernung ist zu verstehen, dass das Trägermaterial nach der Entfernung des Edelmetalls nur noch ≤ 500 Gew.-ppm (Gewichts-ppm) bevorzugt ≤ 100 Gew.-ppm Edelmetall, bezogen auf das Gesamtgewicht von Trägermaterial plus darin/darauf verbliebenem Edelmetall aufweist. Bei dem erfindungsgemäßen Verfahren handelt es sich um ein Verfahren zur Rückgewinnung von Edelmetall von und/oder aus besagtem Heterogenkatalysator; genauer gesagt, handelt es sich dabei um ein Verfahren zur Rückgewinnung des mindestens einen aus der aus Palladium, Platin und Rhodium bestehenden Gruppe ausgewählten Edelmetalls von und/oder aus besagtem Heterogenkatalysator. Bevorzugt erfolgt die Rückgewinnung dabei im Sinne der vorerwähnten nahezu vollständigen Entfernung vom Trägermaterial.

Die salzsaure wässrige Phase A1 des Zweiphasensystems A kann eine Konzentration von beispielsweise bis zu 12 mol Säure, insbesondere im Bereich von 1 bis 12 mol Säure (H₃O⁺) pro Liter haben. Der pH-Wert der salzsauren wässrigen Phase A1 kann beispielsweise in einem Bereich von -1 bis +3 liegen.

Die salzsaure wässrige Phase A1 des Zweiphasensystems A umfasst den vom Trägermaterial übergegangenen Teil des in einer Oxidationsstufe >0 und gelöst vorliegenden mindestens einen Edelmetalls in einem Mengenanteil beispielsweise im Bereich von 0,1 bis 30 g/L.

Das ungelöste Trägermaterial liegt im Zweiphasensystem A in einem Mengenanteil beispielsweise im Bereich von 10 bis 1000 g/L salzsaurer wässriger Phase A1 vor, bevorzugt in einer Menge von 50 bis 100 g/L salzsaurer wässriger Phase A1.

Die salzsaure wässrige Phase A1 des Zweiphasensystems A umgibt das Trägermaterial und liegt im Allgemeinen auch im Inneren, beispielsweise in Poren, des Trägermaterials vor.

Die salzsaure wässrige Phase A1 kann auch weitere Bestandteile enthalten, beispielsweise Reste von Oxidationsmittel und/oder von Edelmetall freie Reaktionsprodukte aus der Oxidation.

Optional kann es vorteilhaft sein, die salzsaure wässrige Phase A1 des Zweiphasensystems A zu verdünnen. Geeignet als Verdünnungsmittel ist beispielsweise eine salzsaure Lösung, Salzsäure oder Wasser.

In der vorerwähnten bevorzugten als auch in der vorerwähnten noch weiteren Ausführungsform des erfindungsgemäßen Verfahrens erfolgt ein Schritt (b), in dessen Verlauf die salzsaure wässrige Phase A1 aus dem Zweiphasensystem A mindestens teilweise abgetrennt und eine weitere wässrige Phase zum verbliebenen Rest des Zweiphasensystems A unter Bildung eines Zweiphasensystems B zugegeben wird. Das mindestens teilweise Abtrennen kann beispielsweise mittels Dekantieren, Filtrieren oder Zentrifugieren erfolgen. Als zuzugebende weitere wässrige Phase sind beispielsweise eine salzsaure Lösung, Salzsäure oder Wasser geeignet. Das so gebildete Zweiphasensystem B umfasst eine salzsaure wässrige Phase B1 und eine feste, das darin unlösliche Trägermaterial umfassende Phase.

Die salzsaure wässrige Phase B1 des Zweiphasensystems B kann eine Konzentration von beispielsweise bis zu 12 mol Säure, insbesondere 1 bis 12 mol Säure (H₃O⁺) pro Liter haben. Der pH-Wert der salzsauren wässrigen Phase B1 kann beispielsweise in einem Bereich von -1 bis +3 liegen.

Die salzsaure wässrige Phase B1 des Zweiphasensystems B umfasst das in einer Oxidationsstufe > 0 und gelöst vorliegende mindestens eine Edelmetall in einem Mengenanteil beispielsweise im Bereich von 0,01 bis 30 g/L.

Das ungelöste Trägermaterial liegt im Zweiphasensystem B in einem Mengenanteil beispielsweise im Bereich von 10 bis 1000 g/L salzsaurer wässriger Phase B1 vor, bevorzugt in einer Menge von 50 bis 100 g/L salzsaurer wässriger Phase B1.

Die salzsaure wässrige Phase B1 des Zweiphasensystems B umgibt das Trägermaterial und liegt im Allgemeinen auch im Inneren, beispielsweise in Poren, des Trägermaterials vor.

Die salzsaure wässrige Phase B1 kann auch weitere Bestandteile enthalten, beispielsweise Reste von Oxidationsmittel und/oder von Edelmetall freie Reaktionsprodukte aus der Oxidation.

Optional kann es vorteilhaft sein, die salzsaure wässrige Phase B1 des Zweiphasensystems B zu verdünnen. Geeignet als Verdünnungsmittel ist beispielsweise eine salzsaure Lösung, Salzsäure oder Wasser.

Falls Schritt (b) im erfindungsgemäßen Verfahren, wie es bevorzugt ist, verwirklicht wird, kann ein optionaler Schritt (b') folgen. Dabei handelt es sich um ein einmal oder mehrmals wiederholt stattfindendes jeweils mindestens teilweises Abtrennen der salzsauren wässrigen Phase aus einem jeweiligen im direkt vorhergehenden Schritt gebildeten Zweiphasensystem und jeweilige Zugabe einer weiteren wässrigen Phase unter Bildung eines weiteren Zweiphasensystems umfassend eine salzsaure wässrige Phase und eine feste, das darin unlösliche Trägermaterial umfassende Phase. Beim nur einmaligen oder beim erstmaligen teilweisen Abtrennen gemäß Schritt (b') handelt es sich bei dem im direkt vorhergehenden Schritt gebildeten Zweiphasensystem um das in Schritt (b) gebildete Zweiphasensystem B.

In Schritt (c) des erfindungsgemäßen Verfahrens findet eine kathodische Elektrodeposition des mindestens einen Edelmetalls entweder (c1) aus der salzsauren wässrigen Phase A1 des Zweiphasensystems A oder (c2) aus der salzsauren wässrigen Phase B1 des Zweiphasensystems B oder (c3) aus der salzsauren wässrigen Phase des final in Schritt (b') gebildeten Zweiphasensystems statt, also jeweils in Gegenwart des festen in der jeweiligen salzsauren wässrigen Phase unlöslichen Trägermaterials. Im Verlauf von Schritt (c) verarmt die betreffende gesamte salzsaure wässrige Phase an dem mindestens einen Edelmetall. "Gesamte salzsaure wässrige Phase" bedeutet hier sowohl deren Anteile innerhalb (insbesondere beispielsweise in Poren und Hohlräumen) als auch außerhalb des festen Trägermaterials.

Unter kathodischer Elektrodeposition ist im Rahmen des erfindungsgemäßen Verfahrens ein Verfahren zu verstehen, bei dem in einer Oxidationsstufe >0 vorliegendes Edelmetall elektrochemisch reduziert wird und elementar auf oder an einer Kathode abgeschieden wird.

Während Schritt (c) kann das feste Trägermaterial im jeweiligen Zweiphasensystem im Sinne einer Suspension homogen verteilt sein, beispielsweise infolge Rühren des Zweiphasensystems oder Durchströmen desselben mit einem inerten Gas. In einer weiteren Ausführungsform kann das feste Trägermaterial die untere der beiden Phasen bilden und unbewegt sein, wobei lediglich die salzsaure wässrige obere Phase bewegt wird, beispielsweise durch Rühren. Beispielsweise kann die kathodische Elektrodeposition auch ohne Rühren stattfinden. Es ist auch möglich, dass das feste Trägermaterial zugleich teilweise suspendiert und der Rest am Boden abgesetzt vorliegt.

Geeignete Elektrodenmaterialien sind dem Fachmann prinzipiell bekannt. Als besonders geeignet haben sich Elektroden aus Graphit, Titan oder Edelstahl erwiesen. Erfindungsgemäß kann die Kathode auch aus Edelmetall gefertigt sein, besonders vorteilhaft aus solchem Edelmetall, wie es auch zurückgewonnen werden soll. Elektroden mit möglichst großer Oberfläche sind besonders geeignet. Prinzipiell sind Elektroden mit beliebiger Form geeignet. Es kann vorteilhaft sein, netz- oder fächerförmige Elektroden zu verwenden. In einer Ausführungsform können mehrere Kathoden verwendet werden.

Die kathodische Elektrodeposition kann ohne räumliche Trennung der Teilreaktionen durchgeführt werden. Es kann aber auch vorteilhaft sein, eine räumliche Trennung der Teilreaktionen durch Membranen, Diaphragmen oder lonenaustauschmembranen vorzunehmen. Beispielsweise kann auf diese Weise mit einem mit verdünnter Schwefelsäure gefüllten Anodenraum gearbeitet werden und so eine Chlorentwicklung an der Anode vermieden werden.

Besonders zweckmäßig wird während der kathodischen Elektrodeposition mit einer Spannung im Bereich von 1,1 bis 5 V gearbeitet.

Die Stromdichte während der kathodischen Elektrodeposition kann im Bereich von beispielsweise 5 bis 300 mA/cm², bevorzugt im Bereich von 10 bis 100 mA/cm², insbesondere im Bereich von 20 bis 40 mA/cm² liegen.

Die kathodische Elektrodeposition kann bei Raumtemperatur, z.B. im Bereich von 15 bis 25 °C oder auch bei höheren Temperaturen von beispielsweise bis zu 90 °C durchgeführt werden. Insbesondere bei Durchführung der kathodischen Elektrodeposition aus salzsaurer wässriger Phase kann es zweckmäßig sein, bei erhöhten Temperaturen, beispielsweise im Bereich von 70 bis 90 °C zu arbeiten.

Die Zeitdauer der kathodischen Elektrodeposition ist nicht weiter beschränkt. Sie richtet sich unter anderem nach der Größe der Elektrodenoberfläche, der eingestellten Stromdichte, der Edelmetallkonzentration zu Beginn von Schritt (c) und dem Zeitpunkt, wann die Edelmetallkonzentration in der salzsauren wässrigen Phase einen gewünschten Grenzwert unterschreitet.

Nach Beendigung von Schritt (c) kann die Edelmetallkonzentration in der salzsauren wässrigen Phase < 50 Gew.-ppm, bevorzugt < 10 Gew.-ppm betragen. Beispielsweise kann die Edelmetallkonzentration dann im Bereich von 0 bis < 50 Gew.-ppm, bevorzugt im Bereich von 5 bis < 10 Gew.-ppm liegen.

Verfahrensschritt (c) verläuft üblicherweise unter sauren Bedingungen im Sinne einer kathodischen Elektrodeposition des mindestens einen Edelmetalls aus salzsaurer wässriger Phase, welche einen pH-Wert beispielsweise im Bereich von -1 bis +3 aufweisen kann. Dabei werden alle Edelmetalle kathodisch abgeschieden.

In bestimmten Fällen kann es allerdings zweckmäßig sein, vor Durchführung der kathodischen Elektrodeposition eine pH-Wert-Anhebung der salzsauren wässrigen Phase in den basischen pH-Wertbereich von beispielsweise ≥ 8 bis 14, bevorzugt ≥ 8 bis 11,5, insbesondere ≥ 8 bis 10 vorzunehmen; hierin wird eine solche im pH-Wert angehobene salzsaure wässrige Phase als "basisch eingestellte salzsaure wässrige Phase" bezeichnet. Insbesondere kann es zweckmäßig sein, vor Durchführung der kathodischen Elektrodeposition eine pH-Wert-Anhebung der salzsauren wässrigen Phase in den basischen pH-Wertbereich von beispielsweise ≥ 8 bis 14, bevorzugt ≥ 8 bis 11,5, insbesondere ≥ 8 bis 10 vorzunehmen, falls das mindestens eine Edelmetall Palladium umfasst oder insbesondere Palladium ist. In diesem Fall kann daher unmittelbar vor Schritt (c) noch ein Schritt (c') erfolgen, um einen geeigneten basischen pH-Wert im Bereich von beispielsweise ≥ 8 bis 14, bevorzugt ≥ 8 bis 11,5, insbesondere ≥ 8 bis 10 einzustellen. Hierbei wird das jeweilige Zweiphasensystem A, B oder das in Schritt (b') final gebildete Zweiphasensystem mit Ammoniumhydroxid plus gegebenenfalls zusätzlich weiterer Base wie beispielsweise NaOH oder KOH versetzt. Das Ammoniumhydroxid kann als Ammoniak zugeführt oder bevorzugt als wässrige Lösung zugesetzt werden; alternativ ist es aber auch möglich, ein unter Einfluss einer starken Base Ammoniumhydroxid freisetzendes Ammoniumsalz gemeinsam mit einer solchen Base wie beispielsweise NaOH oder KOH zuzusetzen. Vorteile dieser basischen Einstellung des pH-Wertes umfassen eine Verminderung oder Vermeidung einer Chlorbildung an der Anode sowie die Möglichkeit, Schritt (c) bei erhöhter Stromdichte mit verringerter Wasserstoffentwicklung durchzuführen. Dabei kann die elektrochemische Effizienz (Verhältnis von abgeschiedenem Palladium zur Stromdichte) verbessert werden. Bei dieser besonderen Ausführungsform des erfindungsgemäßen Verfahrens handelt es sich um ein Verfahren zur Rückgewinnung von Palladium von und/oder aus einem Heterogenkatalysator umfassend ein festes Trägermaterial und mindestens teilweise elementar vorliegendes Palladium, umfassend die aufeinanderfolgenden Schritte:
(a) Überführen des mindestens teilweise elementar vorliegenden Palladiums in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase,
(b) optional aber bevorzugt, mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase,
(b') falls Schritt (b) stattgefunden hat, optional, einmal oder mehrmals wiederholtes mindestens teilweises Abtrennen der salzsauren wässrigen Phase aus dem im vorhergehenden Schritt gebildeten Zweiphasensystem und Zugabe einer weiteren wässrigen Phase unter Bildung eines weiteren Zweiphasensystems umfassend eine salzsaure wässrige Phase und eine feste, das darin unlösliche Trägermaterial umfassende Phase,
(c') Einstellen eines basischen pH-Werts der salzsauren wässrigen Phase A1 des Zweiphasensystems A oder der salzsauren wässrigen Phase B1 des Zweiphasensystems B oder der salzsauren wässrigen Phase des final in Schritt (b') gebildeten Zweiphasensystems im Bereich von ≥ 8 bis 14, bevorzugt ≥ 8 bis 11,5, insbesondere ≥ 8 bis 10, unter Verwendung von Ammoniumhydroxid, und
(c) kathodische Elektrodeposition des Palladiums aus der in Schritt (c') basisch eingestellten salzsauren wässrigen Phase des Zweiphasensystems. Kathodische Elektrodeposition aus der in Schritt (c') basisch eingestellten salzsauren wässrigen Phase des Zweiphasensystems bedeutet, dass Schritt (c) in Gegenwart des festen in der basisch eingestellten salzsauren wässrigen Phase unlöslichen Trägermaterials erfolgt.

Schritt (c') erfolgt unter Verwendung von Ammoniumhydroxid; von Ammoniumhydroxid verschiedene Basen wie Natriumhydroxid oder Kaliumhydroxid können wie gesagt zusätzlich verwendet werden. Insbesondere bei der Einstellung eines pH-Wertes im Bereich von ≥ 8 bis 10 ist es möglich, unter alleiniger Verwendung von Ammoniumhydroxid als Base die pH-Wert-Einstellung vorzunehmen.

Es kann vorteilhaft sein, nach Beendigung des erfindungsgemäßen Verfahrens auch das weitgehend von Edelmetall befreite Trägermaterial zurückzugewinnen. Dies ist vor allem dann der Fall, wenn es sich bei dem Trägermaterial um aufwändig hergestellte Formkörper handelt; zu dem Zweck kann das erfindungsgemäße Verfahren schonend für die Formkörper durchgeführt und beispielsweise auf ein Rühren auch während eines jeweiligen kathodischen Elektrodepositionsschrittes verzichtet werden.

Verfahren zur weiteren Behandlung des in einem jeweiligen kathodischen Elektrodepositionsschritt gewonnenen elementaren Edelmetalls sind dem Fachmann bekannt und richten sich beispielsweise nach der Art des Edelmetalls, den Verfahrensbedingungen und/oder den verwendeten Kathoden. Beispielsweise kann das abgeschiedene Edelmetall an der Kathode anhaften; für diesen Fall kann es anschließend von der Kathode abgetrennt werden, beispielsweise durch mechanische Behandlung, oder die das ursprüngliche Elektrodenmaterial und darauf abgeschiedenes Edelmetall umfassende Kathode wird als Ganzes weiterverarbeitet. Es ist auch möglich, dass das Edelmetall nach elektrochemischer Reduktion nicht an der Kathode anhaftet; hier kann es beispielsweise im Reaktionsraum, der besonders vorteilhaft separiert ist, in Form von Pulver oder Partikeln vorliegen und durch bekannte Verfahren abgetrennt werden.

Unter Verwendung des erfindungsgemäßen Verfahrens kann Edelmetall, genauer gesagt Palladium, Platin und/oder Rhodium, aus verbrauchten Heterogenkatalysatoren umweit- und ressourcenschonend zurückgewonnen werden. Zum einen benötigt die direkte elektrolytische Abscheidung weniger Reaktorvolumen. Außerdem entfallen durch die im Vergleich zu Verfahren gemäß des Standes der Technik verringert anfallenden Volumina an Waschmedium oder Waschwasser bislang notwendige Prozess- und Aufarbeitungsschritte, was einen reduzierten Energie- und Zeitaufwand bedeutet.

### Ausführungsbeispiele

### Beispiel 1:

100 g eines Heterogenkatalysators (Kugeln mit 3 mm Durchmesser; 0,511 Gew.-% Palladium auf Aluminiumoxid) entsprechend 500 mg Palladium wurden mit 1 L 6N Salzsäure vermischt. Dieses Zweiphasensystem wurde 15 min unter Rühren mit Chlor bei 10 Nl/h bei 60 °C durchströmt. Anschließend wurde durch Halten für 30 min bei 90 °C Chlor entfernt. Nach Absetzen lassen der festen Bestandteile wurden 865 ml der flüssigen Phase entfernt. Aus der entfernten flüssigen Phase konnten hydrometallurgisch 476 mg Palladium zurückgewonnen werden. Der zweiphasige Rückstand wurde mit 160 ml Wasser verdünnt und mit 7 g Ammoniumchlorid versetzt. Anschließend wurde 28 gew.-%ige Ammoniumhydroxidlösung zugesetzt, bis ein pH-Wert von 8,8 erreicht war. In einer anschließenden elektrolytischen Abscheidung bei 25°C und einer Stromdichte von 33 mA/cm² mittels Graphitelektroden bei 4V wurde elementares Palladium an der Kathode bei einer elektrochemischen Effizienz von 25% abgeschieden. Die Ausbeute von insgesamt zurückgewonnenem Palladium betrug 99,5 %. Eine Palladium-Analyse des Trägermaterials mittels ICP-OES ergab einen Restgehalt von < 10 Gew.-ppm Palladium bezogen auf das Gesamtgewicht des Trägermaterials.

### Beispiel 2:

50 g eines Heterogenkatalysators (Pulver mit einer Korngröße von 100 µm bis 1 mm); 2 Gew.-% Palladium auf Aluminiumsilikat) entsprechend 1000 mg Palladium wurden für 5 h bei 800 °C in Luftatmosphäre und anschließend für 2 h bei 500 °C unter H₂-Atmosphäre geglüht und anschließend mit 1 L 6N Salzsäure vermischt. Dieses Zweiphasensystem wurde 15 min unter Rühren mit Chlor bei 6 Nl/h bei 60 °C durchströmt. Anschließend wurde durch Halten für 30 min bei 85 °C Chlor entfernt. Nach Absetzen lassen der festen Bestandteile wurden 850 ml der flüssigen Phase entfernt. Aus der entfernten flüssigen Phase konnten hydrometallurgisch 890 mg Palladium zurückgewonnen werden. Der zweiphasige Rückstand wurde mit 150 ml Wasser verdünnt und mit 7 g Ammoniumchlorid versetzt. Anschließend wurde 28 gew.-%ige Ammoniumhydroxidlösung zugesetzt, bis ein pH-Wert von 8 erreicht war. In einer anschließenden elektrolytischen Abscheidung bei 25°C und einer Stromdichte von 33 mA/cm² mittels Graphitelektroden bei 4V wurde elementares Palladium an der Kathode bei einer elektrochemischen Effizienz von 25% abgeschieden. Die Ausbeute von insgesamt zurückgewonnenem Palladium betrug 99,5 %. Eine Palladium-Analyse des Trägermaterials mittels ICP-OES ergab einen Restgehalt von < 10 Gew.-ppm Palladium bezogen auf das Gesamtgewicht des Trägermaterials.

### Beispiel 3:

100 g eines Heterogenkatalysators (Pulver mit einer Korngröße von 100 µm bis 1 mm); 0,5 Gew.-% Palladium und 0,5 Gew.-% Platin auf Aluminiumoxid) entsprechend 500 mg Palladium und 500 mg Platin wurden mit 1 L 6N Salzsäure vermischt. Dieses Zweiphasensystem wurde 30 min unter Rühren mit Chlor bei 6 Nl/h bei 60 °C durchströmt. Anschließend wurde durch Halten für 30 min bei 85 °C Chlor entfernt. Nach Absetzen lassen der festen Bestandteile wurden 850 ml der flüssigen Phase entfernt. Aus der entfernten flüssigen Phase konnten hydrometallurgisch 470 mg Palladium und 450 mg Platin zurückgewonnen werden. Der zweiphasige Rückstand wurde mit 150 ml Wasser verdünnt. In einer anschließenden elektrolytischen Abscheidung bei 85°C und einer Stromdichte von 33 mA/cm² mittels Graphitelektroden bei 1,8 V wurden jeweils elementares Palladium und Platin an der Kathode bei einer elektrochemischen Effizienz von 12% abgeschieden. Die Ausbeute von insgesamt zurückgewonnenem Edelmetall (Palladium und Platin) betrug 99,5 %. Eine Platin- und Palladium-Analyse des Trägermaterials mittels ICP-OES ergab einen Restgehalt von < 10 Gew.-ppm Palladium und < 10 Gew.-ppm Platin bezogen auf das Gesamtgewicht des Trägermaterials.

### Beispiel 4:

100 g eines Heterogenkatalysators (Kugeln mit 3 mm Durchmesser; 0,511 Gew.-% Palladium auf Aluminiumoxid) entsprechend 500 mg Palladium wurden mit 1 L 6N Salzsäure vermischt. Dieses Zweiphasensystem wurde 15 min unter Rühren mit Chlor bei 10 Nl/h bei 60 °C durchströmt. Anschließend wurde durch Halten für 30 min bei 90 °C Chlor entfernt. Nach Absetzen lassen der festen Bestandteile wurden 865 ml der flüssigen Phase entfernt. Aus der entfernten flüssigen Phase konnten hydrometallurgisch 476 mg Palladium zurückgewonnen werden. Der zweiphasige Rückstand wurde mit 150 ml Wasser verdünnt. In einer anschließenden elektrolytischen Abscheidung bei 85°C und einer Stromdichte von 33 mA/cm² mittels Graphitelektroden bei 1,8V wurde elementares Palladium an der Kathode bei einer elektrochemischen Effizienz von 12% abgeschieden. Die Ausbeute von insgesamt zurückgewonnenem Palladium betrug 99,5 %. Eine Palladium-Analyse des Trägermaterials mittels ICP-OES ergab einen Restgehalt von < 10 Gew.-ppm Palladium bezogen auf das Gesamtgewicht des Trägermaterials.

## Patentansprüche

1. Verfahren zur Rückgewinnung von Edelmetall von und/oder aus einem Heterogenkatalysator, welcher ein festes Trägermaterial und mindestens ein aus der aus Palladium (Pd), Platin (Pt) und Rhodium (Rh) bestehenden Gruppe ausgewähltes und mindestens teilweise elementar vorliegendes Edelmetall umfasst, umfassend die aufeinanderfolgenden Schritte:
(a) Überführen des mindestens einen mindestens teilweise elementar vorliegenden Edelmetalls in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase,
(b) optional, mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase,
(b') falls Schritt (b) stattgefunden hat, optional, einmal oder mehrmals wiederholtes mindestens teilweises Abtrennen der salzsauren wässrigen Phase aus dem im vorhergehenden Schritt gebildeten Zweiphasensystem und Zugabe einer weiteren wässrigen Phase unter Bildung eines weiteren Zweiphasensystems umfassend eine salzsaure wässrige Phase und eine feste, das darin unlösliche Trägermaterial umfassende Phase, und
(c) kathodische Elektrodeposition des mindestens einen Edelmetalls entweder (c1) aus der salzsauren wässrigen Phase A1 des Zweiphasensystems A oder (c2) aus der salzsauren wässrigen Phase B1 des Zweiphasensystems B oder (c3) aus der salzsauren wässrigen Phase des final in Schritt (b') gebildeten Zweiphasensystems.

2. Verfahren nach Anspruch 1, wobei die weitere wässrige Phase eine salzsaure Lösung, Salzsäure oder Wasser ist.

3. Verfahren nach Anspruch 1 umfassend die aufeinanderfolgenden Schritte (a) und (c) in der Variante (c1), ohne die Schritte (b) und (b').

4. Verfahren nach Anspruch 1 oder 2 umfassend die aufeinanderfolgenden Schritte (a), (b) und (c) in der Variante (c2), ohne den Schritt (b').

5. Verfahren nach Anspruch 1 oder 2 umfassend die aufeinanderfolgenden Schritte (a), (b), (b') und (c) in der Variante (c3).

6. Verfahren zur Rückgewinnung von Palladium von und/oder aus einem Heterogenkatalysator umfassend ein festes Trägermaterial und mindestens teilweise elementar vorliegendes Palladium, umfassend die aufeinanderfolgenden Schritte:
(a) Überführen des mindestens teilweise elementar vorliegenden Palladiums in eine Oxidationsstufe > 0 durch Behandeln des Heterogenkatalysators mit Oxidationsmittel in Gegenwart von Salzsäure unter Bildung eines Zweiphasensystems A umfassend eine salzsaure wässrige Phase A1 und eine feste, das darin unlösliche Trägermaterial umfassende Phase,
(b) optional, mindestens teilweises Abtrennen der salzsauren wässrigen Phase A1 aus dem Zweiphasensystem A und Zugabe einer weiteren wässrigen Phase zum verbliebenen Rest des Zweiphasensystems A unter Bildung eines Zweiphasensystems B umfassend eine salzsaure wässrige Phase B1 und eine feste, das darin unlösliche Trägermaterial umfassende Phase,
(b') falls Schritt (b) stattgefunden hat, optional, einmal oder mehrmals wiederholtes mindestens teilweises Abtrennen der salzsauren wässrigen Phase aus dem im vorhergehenden Schritt gebildeten Zweiphasensystem und Zugabe einer weiteren wässrigen Phase unter Bildung eines weiteren Zweiphasensystems umfassend eine salzsaure wässrige Phase und eine feste, das darin unlösliche Trägermaterial umfassende Phase,
(c') Einstellen eines basischen pH-Werts der salzsauren wässrigen Phase A1 des Zweiphasensystems A oder der salzsauren wässrigen Phase B1 des Zweiphasensystems B oder der salzsauren wässrigen Phase des final in Schritt (b') gebildeten Zweiphasensystems im Bereich von ≥ 8 bis 14 unter Verwendung von Ammoniumhydroxid, und
(c) kathodische Elektrodeposition des Palladiums aus der in Schritt (c') basisch eingestellten salzsauren wässrigen Phase des Zweiphasensystems.

7. Verfahren nach einem der vorhergehenden Ansprüche, wobei es sich bei dem Heterogenkatalysator um verbrauchten Heterogenkatalysator handelt.

8. Verfahren nach einem der vorhergehenden Ansprüche, wobei der Heterogenkatalysator vor Schritt (a) einem oder mehreren Vorbehandlungsschritten unterzogen worden ist.

9. Verfahren nach einem der vorhergehenden Ansprüche, wobei das Oxidationsmittel ausgewählt ist aus Chloraten, Nitraten, Bromaten, lodaten, Chloriten, Bromiten, loditen, Hypochloriten, Perchloraten, Peroxidverbindungen, Chlor und/oder Ozon.

10. Verfahren nach einem der vorhergehenden Ansprüche, wobei die Edelmetallrückgewinnung im Sinne einer nahezu vollständigen Entfernung vom Trägermaterial erfolgt.

11. Verfahren nach einem der vorhergehenden Ansprüche, wobei die kathodische Elektrodeposition mit räumlicher Trennung der Teilreaktionen durchgeführt wird.

12. Verfahren nach einem der vorhergehenden Ansprüche, wobei die kathodische Elektrodeposition bis zum Erreichen einer Edelmetallkonzentration von < 50 Gew.-ppm in der salzsauren wässrigen Phase erfolgt.
